# EUROPÄISCHE PATENTANMELDUNG

(11) **EP 1 754 546 A1**
(43) Veröffentlichungstag der Anmeldung: **21.02.2007**
(21) Anmeldenummer: 05018040.5
(22) Anmeldetag: 19.08.2005
(51) Int. Cl.: B05D 3/10, B05D 1/36

(54) **Verfahren zur Gummierung von Oberflächen**

(71) Anmelder: KCH Group GmbH, 56427 Siershahn (DE)
(72) Erfinder: Hölter, Dirk, Dr., 56170 Bendorf (DE); Burkhart, Thomas, Dr., 71272 Renningen (DE)
(74) Vertreter: Keller, Günter

(57) **Zusammenfassung**

Offenbart wird ein Verfahren zur Gummierung einer Oberfläche, insbesondere von Teilen von Anlagen, mit einem Gummielastomer, wobei beim Aufbringen des Gummielastomers ein Vernetzungsreagenz in die Klebefuge zwischen Oberfläche und Gummielastomer eingebracht wird, wodurch ohne Wärmezufuhr eine verkürzte Vernetzungszeit des Gummielastomers an der Klebefuge ermöglicht wird.

## Beschreibung

Die vorliegende Erfindung betrifft Beschichtungen von Oberflächen von Anlagen, Behältern und dergleichen, die zum Zwecke der Dichtigkeit oder Korrosionsbeständigkeit mit einer Schutzschicht aus einem Gummielastomer überzogen werden.

Viele industrielle Anlagen werden mit Korrosionsschutzbeschichtungen versehen, um deren Beständigkeit zu verbessern. Zum Beispiel müssen Vorrichtungen zur Rauchgasentschwefelung vor den im Rauchgas enthaltenen aggressiven Chemikalien geschützt werden. Korrosionsschutz muss dabei vor allem gegen gelöste Salze, Gase und wässrige, saure Kondensate gewährleistet sein. Die Temperaturbeanspruchung liegt hierbei zwischen 50°C und 70°C. Als geeignete Beschichtungsmaterialien haben sich hierfür insbesondere Gummielastomere auf der Basis von Natur- und Synthesekautschuk, wie Isopren-, Chloropren-, Styrol-Butadien-, Isobuten-Isopren-Kautschuke, herausgestellt. Diese werden meist in vorgefertigten Bahnen des Gummielastomers, als Gummibahnen bezeichnet, verarbeitet.

Speziell bei Rauchgasentschwefelungsanlagen haben sich Gummibahnen aus einem bromierten Gummielastomer durch ihre hervorragende Gasdichtheit und chemische Widerstandsfähigkeit ausgezeichnet (Fenner, Journal of Protective Coatings 1998, S. 15,34).

Diese halogenierten, bevorzugt bromierten Butylkautschuke (BIIR) zeigen eine hohe Beständigkeit gegen aggressive chemische Medien, aber auch gegen Hitze und/oder Licht und sind verschleißbeständig.

Die bei der Verarbeitung der Gummielastomere eingesetzten vorgefertigten Gummibahnen können in verschiedenen Vernetzungszuständen eingesetzt werden. Vor- oder ausvulkanisierte Gummibahnen haben den Vorteil, nicht mehr unter erhöhtem Druck und Temperatur vernetzt werden zu müssen, ihre Steifigkeit und ihre schwächere Oberflächenbindung ist bei der Verarbeitung jedoch unvorteilhaft.

Unvernetzte Bahnen zeigen eine geringere Steifigkeit, eine plastische Verformbarkeit und kovalente Verknüpfbarkeit mit dem Klebstoffsystem. Diese Bahnen müssen aber nach dem Aufbringen auf Oberflächen noch nachbehandelt werden (Temperatur, Druck), wenn die Polymerisierung in einem kürzeren Zeitraum erfolgen soll.

Als Klebstoffsysteme werden gewöhnlich lösemittelhaltige Klebstoffe eingesetzt, die im Falle der unvernetzten Gummibahnen üblicherweise auf dem gleichen Gummielastomer basieren. Der Klebstoff wird in die Klebefuge zwischen Träger, wie Metall, Beton oder Gummielastomer, und neu aufzubringendem Gummielastomer eingebracht.

Nach der Applikation von Klebstoff und Gummielastomer auf den Träger ist in den meisten Fällen eine Teilvernetzung nötig, um eine erwünschte Haftfestigkeit und chemische und physikalische Beständigkeit zu gewährleisten. Die sich langsam vollziehende Selbstvernetzung der selbst- oder auch sogenannten kaltvernetzenden Bahnen über mehrere Wochen ist aufgrund des Zeitaufwandes meistens unpraktikabel.

Die zur Verkürzung der Vernetzungsdauer durchgeführte Vernetzung durch Temperaturbeaufschlagung (z.B. Heißdampf, Heißluft oder Heißwasser) erweist sich ebenfalls als nicht vorteilhaft. Aufgrund der plastischen Eigenschaften des unvernetzten Gummielastomers und Lösungsmittelrückständen bzw. Lufteinschlüssen kommt es bei zu schneller Erwärmung ohne Anwendung von Druck oder bei geringem Druck zur Bildung von Poren, die eine geringere Endhaftfestigkeit des Gummielastomers nach sich ziehen, oder im Extremfall zu Blasenbildung mit teilweiser Ablösung des Gummielastomers von der Oberfläche.

Gewöhnlich wird zur Vermeidung dieses Problems die Temperatur bei der Beaufschlagung langsam stufenweise erhöht, bevor mit Betriebstemperatur belastet werden kann. Diese Verfahren sind jedoch aufgrund der Zeitbeanspruchung von mehreren Tagen unvorteilhaft.

Es besteht daher ein Bedarf nach weiteren Verfahren zur Gummierung einer Oberfläche, das eine rasche Vernetzung des Gummielastomers an der Klebefuge ermöglicht, wodurch die Gummierung nach kürzerer Zeit gebrauchsfertig ist.

Die vorliegende Erfindung betrifft ein Verfahren zur Gummierung einer Oberfläche mit einem Gummielastomer, bei dem beim Aufbringen des Gummielastomers ein Vernetzungsreagenz eingesetzt wird, wodurch auch ohne Wärmezufuhr eine verkürzte Vernetzungszeit des Gummielastomers an der Klebefuge ermöglicht wird.

Die Oberfläche, auch als Träger bezeichnet, die zur Gummierung vorgesehen ist, kann eine Anlage oder ein Teil einer Anlage sein, die Rohranlagen, Vorratsbehälter, Tanks, Tankschiffe, Kesselwagen und dergleichen umfasst. Bevorzugt handelt es sich um Anlagen zur Rauchgasentschwefelung.

Unter der "Klebefuge" wird in der vorliegenden Erfindung der Bereich der zwischen dem Träger, einschließlich der evtl. vorhandenen Grundierung, und der aufzubringenden Gummierung aus dem Gummielastomer verstanden, was den evtl. vorhandenen Klebstoff umfasst. Die Grundierung auf dem Träger kann auch mit Klebstoff vorbehandelt sein.

Unter "Vernetzen" wird in der vorliegenden Erfindung die Ausbildung kovalenter Bindungen zwischen Gummielastomer-Polymerketten bzw. Kettenenden des Gummielastomeres und/oder Klebstoffes verstanden, was auch als "Vulkanisieren" bezeichnet wird. Durch diesen Vorgang und der entsprechenden Verschränkung und Verzahnung der Polymerketten wird die eigentliche Haftung der Gummierung am Trägermaterial bewirkt.

Die Eigenschaften und die Lebensdauer der für die Auskleidungen hergestellten Gummierungen werden sowohl durch den Kautschuk und die sonstigen Mischungsbestandteile als auch durch die Folienherstellung und -applikation vor Ort bestimmt.

In der Praxis werden bei diesen Einsatzfällen vorwiegend Naturkautschuk, Isopren-, Chloropren-, Styrol-Butadien-, Isobuten-Isopren-, Acrylnitril-Butadien-Kautschuke, EPDM oder CSM (chlorosulfonated polyethylene) für Korrosionsschutzauskleidungen allgemein verwendet. Besonders eignen sich als Baustellengummierungen Halogen enthaltende Kautschuke. Besonders bevorzugt sind chlorierte oder bromierte Butylkautschuke, die einen geringen Diffusions- und Permeationskoeffizienten gegenüber wässrigen Medien, Wasserdampf, SO₂, HCl und anderen Gasen und eine gute Beständigkeit gegen aggressive Medien aufweisen. Darüber hinaus sind diese Kautschuke aufgrund ihres thermischmechanischen Alterungsverhaltens sowie ihrer Neigung zur Selbstvulkanisation günstig.

Das Gummielastomer der vorliegenden Erfindung basiert besonders bevorzugt auf bromierten Kautschuken wie z.B. Brombutylkautschuk (bromierter Isopren/Isobuten-Copolymer(BIIR)) oder bromierten Copolymeren aus Isobutylen oder p-Methylstyrol.

Diese halogenhaltigen, insbesondere bromierten, Kautschuke, insbesondere die Butylkautschuke eignen sich als Gummierung aufgrund ihrer geringen Diffusions- und Permeationskoeffizienten gegenüber Wasser, Wasserdampf, SO₂, HCl und anderen Gasen und einer guten Beständigkeit gegenüber aggressiven Agenzien ganz besonders. Außerdem zeichnen sich diese Gummielastomere durch ihr thermisch-mechanisches Alterungsverhalten sowie ihre Neigung zur Selbstvernetzung aus.

Der Anteil der bromierten Gummielastomere am Gesamt-Gummielastomergehalt kann von 20 bis 100 %, vorzugsweise 70 bis 100 % betragen. Im übrigen enthalten die Gummielastomere damit verträgliche Polymere, die speziell gewünschte Eigenschaften bei dem fertigen Produkt beisteuern. Die bromierten Gummielastomere können sich aus einem Gemisch von verschiedenen bromierten Gummielastomeren zusammensetzten.

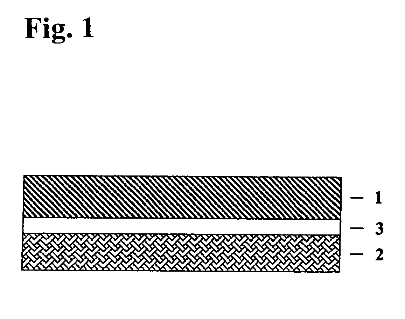

Als Klebstoffsysteme werden für gewöhnlich lösemittelhaltige Klebstoffe eingesetzt, die im Falle der unvulkanisierten Gummibahnen die gleiche Polymerbasis aufweisen, wie das zu verklebende Material. Wie eine derartige Verklebung im Querschnitt aufgebaut ist, ist in Fig. 1 dargestellt.

In Fig. 1 bezeichnet Ziffer **1** die Gummibahn, **2** den Trägerwerkstoff (z.B. Metall, Beton oder weitere Gummibahn). Mit 3 ist die Klebfuge gekennzeichnet. Die Klebfuge kann aus einer oder mehreren Schichten aufgebaut sein, d.h. keine, eine oder mehrere Grundierungsschichten auf den Trägerwerkstoff und eine oder mehrere Klebstoffschichten zwischen Bahn und Grundierung bzw. eine oder mehrere Klebstoffschichten zwischen Trägerwerkstoff und Gummibahn. Dabei können bei einer Verklebung für die einzelnen Schichten der Klebfuge unterschiedliche Grundierungen und/oder unterschiedliche Klebstoffe eingesetzt werden.

Nach der Applikation ist für die meisten Einsatzfälle zumindest eine Teilvulkanisation der Gummifolie in Abhängigkeit von Zeit und Temperatur notwendig, damit die erwünschte Haftfestigkeit und chemisch-physikalische Beständigkeit erreicht wird.

Sind längere, d.h. mehrwöchige Standzeiten zwischen Applikation und chemischer bzw. physikalischer Belastung akzeptabel, lässt sich dies bei unvulkanisiert applizierten Bahnen durch Selbstvulkanisation des entsprechend beschleunigten Materials realisieren. In den meisten Fällen steht aber nicht genügend Zeit zur Verfügung die Selbstvulkanisation abzuwarten und das gummierte Bauteil soll so kurzfristig wie möglich eingesetzt werden. In diesem Fall ist eine Vulkanisation durch Temperaturbeaufschlagung (z.B. Heißdampf, Heißluft, Heißwasser) notwendig.

Die Klebstoffe der vorliegenden Erfindung sind vorzugsweise lösungsmittelhaltig und basieren auf den halogenierten Gummielastomer-Polymeren, vorzugsweise auf bromierten Gummielastomeren, wie Brombutylkautschuk oder bromierten Copolymeren aus Isobutylen und p-Methylstyrol. Der Anteil der bromierten Gummielastomere am Gesamt-Gummielastomergehalt beträgt 20 bis 100 %, vorzugsweise 70 bis 100 %. Die bromierten Gummielastomere des Klebstoffs können sich aus einem Gemisch von verschiedenen bromierten Gummielastomeren zusammensetzen.

Der Klebstoff kann direkt auf den Trägerwerkstoff aufgegeben werden oder der Trägerwerkstoff zuvor mit einer oder mehreren Grundierungsschichten versehen werden. Die verwendeten Grundierungen richten sich nach Trägerwerkstoff und Einsatzfall. Bei mehr als einer Grundierungsschicht können auch unterschiedliche Grundierungen verwendet werden.

Erfindungsgemäß wird ein Vernetzungsreagenz eingesetzt. Das Vernetzungsreagenz der vorliegenden Erfindung umfasst vorzugsweise eine starke organische Base mit ^{MeCN}pK_{BH}+≥5, vorzugsweise mit ^{MeCN}pK_{BH}+≥10, wie beispielsweise DBU (Diazabicyclo[5.4.0]undec-7-en), DABCO (Diazabicyclo[2.2.2]octan), DBN (Diazabicyclo-[4.3.9]non-5-en), TBD (1,5,7-Triazabicyclo[4.4.0]dec-5-en), MTBD (7-Methyl-1,5,7-triazabicyclo[4.4.0]dec-5-en), TMG (Tetramethylguanidin), Ethyldiisopropylamin, Trimethylamin, Triethylamin, Tributylamin, N,N-Dimethylanilin, N,N-Dimethyl-benzylamin, Pyridin, DMAP (Dimethylaminopyridin), Lutidin, Quinuclidin, Pempidin, Collidin, N-Methylpiperidin, N-Methylmorpholin, N-Ethylmorpholin, oder ungeladene, peralkylierte Polyamino-Phosphazenbasen. Zusätzlich kann das Vernetzungsreagenz Lösungsmittel, Pufferagenzien und/oder Hilfsstoffe umfassen.

In einer bevorzugten Ausführungsform der vorliegenden Erfindung wird das Vernetzungsreagenz in die Klebefuge eingebracht.

Das Einbringen des Vernetzungsreagenzes in die Klebefuge kann durch Aufbringen auf den Trägerwerkstoff und/oder durch das Zusetzen des Vernetzungsreagenzes zu dem Klebstoff bei einem oder mehreren Klebstoffaufträgen und/oder durch das Applizieren auf das Gummielastomer vollzogen werden.

In einer Ausführungsform der vorliegenden Erfindung wird eine oder mehrere Grundierungslösungen zur Grundierung des Trägerwerkstoffes verwendet, die das Vernetzungsreagenz umfassen und/oder die Grundierung mit einer Lösung behandelt, die das Vernetzungsreagenz umfasst.

In einer Ausführungsform der vorliegenden Erfindung umfasst der Klebstoff oder ein Teil des Klebstoffs das Vernetzungsreagenz, oder eine oder mehrere Klebstoffschichten werden mit einer Lösung behandelt, die das Vernetzungsreagenz umfasst.

Vorzugsweise wird das Vernetzungsreagenz zur einfacheren Handhabung dem Klebstoff zugesetzt.

Bei erfolgter Applikation diffundiert das Vernetzungsreagenz durch Grundierung, sofern vorhanden, und Klebstoff in den dem Träger zugewandten Bereich des Gummielastomers (bis zu mehreren hundert µm) und führt bereits bei Raumtemperatur innerhalb kurzer Zeit, zwischen wenigen Minuten und mehreren Tagen, abhängig vom verwendeten Vernetzungsreagenz, zu einer Vernetzung. Wenn es sich bei dem Träger auch um ein Gummielastomer handelt bzw. der Träger schon mit einem Gummielastomer versehen ist, diffundiert das Vernetzungsreagenz auch hierein. Die Vernetzungsgeschwindigkeit kann durch Auswahl des geeigneten Vernetzungsreagenz und eingesetzter Menge gesteuert werden.

Nach der Applikation des Gummielastomers auf den Träger folgt evtl. eine Wartezeit, die zur Verringerung der Lösemittelkonzentration in der Klebefuge dient. Anschließend wird mittels Temperaturbeaufschlagung die Vernetzung des Gummielastomers beschleunigt. Dies kann unter Umständen durch den normalen Betrieb der Anlage erfolgen. Vor einer Temperaturbelastung sollte die Konzentration der Lösemittel in der Klebefuge ausreichend abgenommen haben, da dieser Bereich sonst noch zu sehr aufgeweicht ist und keine ausreichende Festigkeit aufweist.

Ein Vorteil der Erfindung liegt in der verkürzten Zeit, nach der bei einem Verfahren zur Gummierung einer Oberfläche mit einem Gummielastomer die Vernetzung des Gummielastomers mit maximaler Temperaturbeaufschlagung bei gleichbleibenden oder besseren Eigenschaften der Gummierung durchgeführt werden kann. Bei den aus dem Stand der Technik bekannten Verfahren liegt die benötigte Zeit zwischen etwa 7 und 10 Tagen. Erfindungsgemäß kann diese Zeit auf etwa 1 bis 2 Tage verkürzt werden.

Ansonsten wird durch das erfindungsgemäße Verfahren eine gegenüber dem Stand der Technik mechanisch beständigere Vernetzung des Trägers mit der Gummierung erreicht. Testverfahren zur Beurteilung der Qualität von Gummierungen werden beispielsweise in Brockmann et al., Kleben & Dichten, Adhäsion, Jahrgang 40, 11/1996, S. 38-42 beschrieben.

Außerdem betrifft die Erfindung die Verwendung einer organischen Base als Vernetzungsreagenz für ein Gummielastomer, wobei das Vernetzungsreagenz zu einer raschen Vernetzung des Gummielastomers an einer Klebefuge ohne Wärmezufuhr verwendet wird.

Weiter betrifft die Erfindung die Verwendung einer organischen Base als Vernetzungsreagenz für ein Gummielastomer, wobei die organische Base einen ^{MeCN}pK_{BH}+≥5, insbesondere einen ^{MeCN}pK_{BH}+≥10 aufweist.

Die vorliegende Erfindung soll durch das vorliegende Beispiel verdeutlicht, aber nicht beschränkt werden:

### Beispiel

Beschichtung von Stahl

Verklebung A entspricht der erfindungsgemäßen Gummierung von Stahl mit einem Brombutyl-Gummielastomer in Form einer vorgefertigten Gummibahn.

Verklebung B ist ein Vergleichsbeispiel nach dem Stand der Technik.

Der Stahl wurde in beiden Fällen vor der Verklebung gestrahlt (Sa 2 ½) und mit zwei Grundierungen nach dem Stand der Technik zur Verklebung von unverknüpften Butylkautschukbahnen beschichtet.

Das Gummielastomer enthielt folgende Inhaltsstoffe in phr (parts by 100 parts of rubber, Teile auf 100):
100 phr Brombutyl-Kautschuk
10 phr Elastomerweichmacher
100 phr Ruß
5 phr Verarbeitungshilfsmittel
5 phr Metalloxid
5 phr Beschleuniger

Der Klebstoff setzte sich folgendermaßen zusammen:
100 phr Brombutyl-Kautschuk
40 phr Füllstoff
10 phr Klebrigmacher
5 phr Metalloxid
5 phr Beschleuniger
850 phr apolares Lösungsmittel

Als Vernetzungsreagenz wurde DBU (Diazabicyclo[5.4.0]undec-7-en) verwendet.

### Verklebung A

Bei der Verklebung A wurde auf den grundierten Stahl eine Schicht Klebstoff und anschließend eine Schicht Klebstoff, dem vorher 3 % DBU zugesetzt worden war, aufgetragen.

Auf die Gummielastomerbahn wurde eine Schicht Klebstoff aufgetragen, dem vorher 3 % DBU zugesetzt worden war.

Nach etwa 40-minütiger Ablüftezeit wurden die Gummielastomerbahn und der Stahl zusammengefügt.

### Verklebung B

Die Verklebung B wurde analog der Verklebung A durchgeführt, wobei nur Klebstoff ohne Zusatz von DBU eingesetzt wurde.

Beide Verklebungen wurden für zwei Tage bei Zimmertemperatur gelagert und anschließend fünf Tage mit einer Temperatur von 70°C beaufschlagt.

Anschließend wurden die Verklebungen auf Schälfestigkeit und optisches Erscheinungsbild geprüft. Dabei wurden folgende Ergebnisse erhalten:
Verklebung A:
   Schälfestigkeit 8,4 N/mm²,
   die Trennung erfolgt innerhalb des Gummis, es sind keine Poren sichtbar. In bzw. an der Klebefuge ist keine Trennung erkennbar.
Verklebung B:
   Schälfestigkeit 2,8 N/mm²,
   die Klebefuge zeigt eine Trennung, die Klebefuge und der angrenzende Bereich der Gummibahn sind stark porig, es treten teilweise Abhebungen mit Blasenbildung auf.

## Patentansprüche

1. Verfahren zur Gummierung einer Oberfläche, insbesondere von Teilen von Anlagen, mit einem Gummielastomer, **dadurch gekennzeichnet, dass**
beim Aufbringen des Gummielastomers ein Vernetzungsreagenz in die Klebefuge zwischen Oberfläche und Gummielastomer eingebracht wird, wodurch ohne Wärmezufuhr eine verkürzte Vernetzungszeit des Gummielastomers an der Klebefuge ermöglicht wird.

2. Verfahren nach Anspruch 1, **dadurch gekennzeichnet, dass** ein Vernetzungsreagenz verwendet wird, das wenigestens eine organische Base umfasst, die das Gummielastomer bei Raumtemperatur vernetzt.

3. Verfahren nach Anspruch 2, **dadurch gekennzeichnet, dass** ein Vernetzungsreagenz verwendet wird, das eine organische Base umfasst, die einen ^{MeCN}pK_{BH}+≥5, insbesondere einen ^{MeCN}pK_{BH}+≥10 aufweist.

4. Verfahren nach einem der Ansprüche 1 bis 3, **dadurch gekennzeichnet, dass** ein Gummielastomer verwendet wird, das zu 20-100 %, insbesondere 70-100 %, halogenierte Kautschuke, insbesondere bromierte Kautschuke umfasst.

5. Verfahren nach Anspruch 4, **dadurch gekennzeichnet, dass** bromierte Copolymere des iso-Butylens als Kautschuk verwendet werden.

6. Verfahren nach einem der Ansprüche 1 bis 5, **dadurch gekennzeichnet, dass** das Gummielastomer in Form von vorgefertigten Bahnen verwendet wird.

7. Verfahren nach einem der Ansprüche 1 bis 6, **dadurch gekennzeichnet, dass** das Vernetzungsreagenz in die Klebefuge durch Aufbringen auf den Trägerwerkstoff und/oder durch das Zusetzen des Vernetzungsreagenzes zu dem Klebstoff bei einem oder mehreren Klebstoffaufträgen und/oder durch das Applizieren auf das Gummielastomer und/oder durch das Einbringen in oder das Aufbringen auf die Grundierung eingebracht wird.

8. Verfahren nach Anspruch 7, **dadurch gekennzeichnet, dass** das Vernetzungsreagenz bei einem oder mehreren Klebstoffaufträgen dem Klebstoff zugesetzt wird.

9. Verfahren nach einem der vorhergehenden Ansprüche, **dadurch gekennzeichnet, dass** der Klebstoff auf in Lösungsmittel gelöstem Kautschuk basiert, wobei der eingesetzte Kautschuk halogeniert ist bzw. bei Kautschukgemischen 20 - 100 %, vorzugsweise 70 - 100 % der Kautschuke halogenierte Kautschuke sind.

10. Verfahren nach einem der Ansprüche 1 bis 9, bei dem zusätzlich Vernetzungsreagenz auf die Oberfläche der applizierten Gummibahn gegeben wird, um die chemische und physikalische Beständigkeit dieses Bereichs zu verbessern.

11. Verfahren nach einem der vorhergehenden Ansprüche, **dadurch gekennzeichnet, dass** das Vernetzungsreagenz vor der Zugabe in einem Lösemittel gelöst oder verdünnt wird.

12. Verwendung einer organischen Base als Vernetzungsreagenz für die Gummierung einer Oberfläche, **dadurch gekennzeichnet, dass** das Vernetzungsreagenz für eine rasche Vernetzung des Gummielastomers an einer Klebefuge ohne Wärmezufuhr verwendet wird.

13. Verwendung einer organischen Base nach Anspruch 11 **dadurch gekennzeichnet, dass** die organische Base einen ^{MeCN}pK_{BH}+≥5, insbesondere einen ^{MeCN}pK_{BH}+≥10 aufweist.
